## Europäisches Patentamt
## European Patent Office
## Office européen des brevets

(19)

(11) Veröffentlichungsnummer : **0 099 557**
**B1**

(12)

# EUROPÄISCHE PATENTSCHRIFT

(45) Veröffentlichungstag der Patentschrift :
11.11.87

(51) Int. Cl.⁴ : **A 23 F   3/30**, A 23 F   3/34,
A 23 L   2/38, A 23 G   1/00

(21) Anmeldenummer : 83106954.7

(22) Anmeldetag : 15.07.83

(54) Instant-Getränke und Instant-Tees sowie Verfahren zu ihrer Herstellung.

(30) Priorität : 17.07.82 DE 3226765
07.10.82 DE 3237077
04.02.83 DE 3303709

(43) Veröffentlichungstag der Anmeldung :
01.02.84 Patentblatt 84/05

(45) Bekanntmachung des Hinweises auf die Patenterteilung : 11.11.87 Patentblatt 87/46

(84) Benannte Vertragsstaaten :
AT BE CH DE FR GB IT LI LU NL SE

(56) Entgegenhaltungen :
EP-A- 0 019 675
DE-A- 2 807 208
GB-A- 1 464 571
GB-A- 2 067 573
US-A- 3 770 452
US-A- 3 970 520
US-A- 3 988 511
US-A- 4 130 555
US-A- 4 167 587

(73) Patentinhaber : Krüger GmbH & Co. KG
Meisenweg 2 Postfach 20 05 29
D-5060 Bergisch Gladbach 2 (DE)

(72) Erfinder : Schott, Gerhard
Am Werfel 14
D-4020 Mettmann (DE)

(74) Vertreter : Werner, Hans-Karsten, Dr. et al
Deichmannhaus am Hauptbahnhof
D-5000 Köln 1 (DE)

**0 099 557**

**Beschreibung**

Instant-Tees wurden bisher in erheblichem Umfang aus getrockneten Pflanzenextrakten, gegebenenfalls Geschmacks- und/oder Aromastoffen und einem rasch wasserlöslichen Träger hergestellt. Als Träger wurden vorwiegend Saccharose und Dextrose eingesetzt. Die Instant-Tees wurden hergestellt, indem man die Komponenten mit Ausnahme des Trägers entweder einzeln oder gemeinsam sprühgetrocknet mit dem Träger vermischt hat und gewünschtenfalls anschließend granuliert hat. Besonders empfindliche Pflanzenextrakte sind zum Teil auch durch Gefriertrocknung gewonnen worden. Wegen der relativ hohen Kosten einer Gefriertrocknung wurde stattdessen auch gelegentlich ein sprühgetrocknetes Präparat eingesetzt, dem anschließend wieder ein Geschmacks- oder Aromastoff zugesetzt werden konnte. Instant-Tees auf Basis von Saccharose und/oder Dextrose enthielten im allgemeinen 1 bis 6, vorzugsweise 2 % Pflanzenextrakt. Die überwiegende Menge des Instant-Tees bestand aus dem Träger, der dementsprechend 94 bis 99 % Gew.-% ausmachte.

Instant-Tees auf Basis von Saccharose und/oder Dextrose weisen den Nachteil auf, daß bei übersteigerter Verwendung insbesondere bei Säuglingen und Kleinkindern, durch den eingesetzten Zucker gehäuft Karies beobachtet wird. In einigen Produkten ist man daher dazu übergegangen, als Trägerstoff Maltodextrin einzusetzen. Untersuchungen haben jedoch ergeben, daß auch Maltodextrin ähnliche kariogene Eigenschaften wie Saccharose und Dextrose hat.

Die Erfindung hat sich zunächst die Aufgabe gestellt, Instant-Tees zu entwickeln, welche nicht den Nachteil der Kariogenität aufweisen und daher unbedenklich auch bei Säuglingen und Kleinkindern eingesetzt werden können. Dabei sollen jedoch die Haltbarkeit, Dosierbarkeit und Handhabbarkeit herkömmlicher Instant-Tees erhalten bleiben.

Lebensmittelrechtlich unterscheidet man Tee, Tee-Getränke, Frucht-Tee und Frucht-Tee-Getränke. In allen Fällen ist ein wesentlicher Bestandteil ein Extrakt oder Pulver pflanzlicher Herkunft, wobei Blätter, Wurzeln, Rinden, Blüten aber auch Früchte verwendet werden. Der Begriff Tee umfaßt somit sprachlich eine Reihe von pflanzlichen Extrakten und Pulvern, die lebensmittelrechtlich je nach ihrer Herkunft und sonstigen Zutaten in die vier Gruppen : Tee, Tee-Getränke, Frucht-Tee und Frucht-Tee-Getränke unterteilt werden. Die vorliegende Erfindung betrifft alle vier lebensmittelrechtlich unterschiedenen Gruppen von Tees.

Instant-Tees umfassen somit im weitesten Sinne lebensmittelrechtlich gesehen Instant-Tees, Instant-Tee-Getränke sowie Instant-Frucht-Tees und Instant-Frucht-Tee-Getränke. Der Zusatz « Instant » besagt jeweils, daß die Tees in Pulver-, Granulat- oder Pastenform vorliegen und beim Zusammenbringen mit einer Flüssigkeit rasch dispergiert und/oder gelöst werden, so daß man rasch und einfach die trinkfertige Zubereitung erhält. Instant-Tees umfassen somit nicht die trinkfertigen Zubereitungen mit einer Flüssigkeit, sondern nur die pulver-, granulat- oder pastenförmige Vorstufe. Die erfindungsgemäßen Instant-Tees, Instant-Tee-Getränke sowie Instant-Frucht-Tees und Instant-Frucht-Tee-Getränke umfassen weiterhin nicht die reinen Pflanzenextrakte, Pflanzenpulver, Fruchtextrakte oder Fruchtpulver ohne einen Träger, da diese im allgemeinen nicht oder nur vorübergehend instantisiert werden können, meist sehr hygroskopisch sind und wegen ihrer hohen Konzentration und häufig hohen Schüttdichte sehr schwer dosierbar und handhabbar sind. Pflanzenextrakte, die ohne Träger instantisiert worden sind, sind so hygroskopisch, daß sie bereits nach kurzer Zeit unter Zutritt von Luftfeuchtigkeit zu harten Produkten verklumpen, die nicht mehr gut dosierbar sind, höhere Schüttdichte aufweisen und nur noch langsam in Wasser löslich sind. Ein weiterer Nachteil von instantisierten Pflanzenextrakten ohne Träger besteht darin, daß sie durch das Instantisieren in erheblichem Maße Aromastoffe und vielfach auch Anteile ihrer Wirkstoffe verlieren. Ein nachträglicher Zusatz von flüssigen Geschmacks- und/oder Aromastoffen ist beim Instantisieren ohne Träger ebenfalls praktisch nicht möglich.

Es wurde jetzt gefunden, daß man Instant-Tees, Instant-Tee-Getränke sowie Instant-Frucht-Tees und Instant-Frucht-Tee-Getränke in Pulver-, Granulat- oder auch Pastenform, enthaltend Pflanzenextrakt und/oder Pflanzenpulver und/oder Fruchtextrakte und/oder Fruchtpulver sowie ggf. Geschmacks- und/oder Aromastoffe erhält, wenn man ein in Wasser klar lösliches, kurzkettiges Protein aus Bindegewebe mit dem MG 2 000 bis 10 000 mit Ausnahme von in warmem Wasser löslicher Gelatine als Träger verwendet. Die erfindungsgemäßen Instant-Tees und Instant-Tee-Getränke sowie Instant-Frucht-Tees und Instant-Frucht-Tee-Getränke sind somit dadurch gekennzeichnet, daß sie keinen Zusatz von kariogenen Kohlenhydraten enthalten, der Träger ein in Wasser klar lösliches, kurzkettiges Protein aus Bindegewebe mit dem MG 2 000 bis 10 000 mit Ausnahme von in warmem Wasser löslicher Gelatine ist und in einer Menge von 44,9 bis 94,7 Gew.-% vorliegt.

Weiterhin wurde gefunden, daß nach diesem Prinzip auch Instant-Getränke in Pulver-, Granulat- und Pastenform herstellbar sind, welche Kakaopulver, oder pulverförmige Genußsäuren und/oder Vitamine enthalten. Gegenstand der vorliegenden Anmeldung sind somit weiterhin Instant-Getränke und Verfahren zu ihrer Herstellung.

Aus der DE-A-28 07 208 (I) sind warmwasserlösliche Getränkepulvermischungen zur Herstellung von gelatinehaltigen Getränken bekannt. Dabei wird feinstgemahlenes Gelatinepulver mit einer Körnung entsprechend etwa 60 mesh mit etwa gleich großen Geschmacksträgern wie Kaffeepulver, Fruchtsaftpul-

2

0 099 557

ver, Instantkakaopulver, Suppenpulver oder Teepulver vermischt und vorzugsweise portionsweise vakuumverpackt. Durch die spezielle Vermahlung und Vermischung mit den Geschmacksträgern soll es möglich sein, die Getränkepulvermischungen unmittelbar in heißem Wasser zu lösen, ohne daß es zu Verklumpungen führt.

Aus der GB-A-1 464 571 (II) sind künstlich gesüßte, trockene Getränkepulvermischungen bekannt, die aus APM (L-aspartyl-L-phenyl-alanine) und einem in kaltem Wasser löslichen Molkeprotein bestehen. Die Gemische aus APM und Molkeprotein sollen einen besseren Geschmack aufweisen als reines APM, insbesondere soll der unerwünschte Nachgeschmack unterdrückt werden. Versuche mit Gelatine haben nicht den gleichen Effekt gezeigt. Die dort beschriebenen Gemische können im Gemisch mit kariogenen Süßungsmitteln wie Saccharose, Glucose etc. verwendet werden.

Die US-A-3 970 520 (III) beschreibt die Herstellung von geschmacklich akzeptablen wasserlöslichen Proteinen durch enzymatische Teilhydrolyse. Diese Proteine wurden zur Verbesserung des Nährwertes Lebensmitteln zugesetzt und erhöhten beispielsweise das Schäumen von Bier oder den Nährwert von karbonisierten Getränken. Die fertigen Gemische enthielten stets größere Mengen kariogener Kohlenhydrate.

Erfindungsgemäß werden in Wasser klar lösliche, kurzkettige Proteine aus Bindegewebe mit dem MG 2 000 bis 10 000 mit Ausnahme von in warmem Wasser löslicher Gelatine als Träger eingesetzt.

Im Gegensatz zu Instant-Tees auf Basis von Saccharose und/oder Dextrose, die im allgemeinen 1-6 %, vorzugsweise 2 % Pflanzenextrakt enthalten, enthalten die erfindungsgemäßen Instant-Tees, Instant-Tee-Getränke sowie Instant-Frucht-Tees und Instant-Frucht-Tee-Getränke 5,3-55,1 Gew.-%, vorzugsweise 10-50 Gew.-% Pflanzenextrakt und/oder Pflanzenpulver und/oder Fruchtextrakte und/oder Fruchtpulver und dementsprechend vorzugsweise nur 50-90 Gew.-% Protein als Träger.

Überraschenderweise ist es möglich, bei der erfindungsgemäßen Verwendung von Protein als Träger eine größere Menge Kakaopulver, Pflanzenextrakt und/oder Pflanzenpulver und/oder Fruchtextrakt und/oder Fruchtpulver zu instantisieren und dabei trotzdem noch Produkte zu erhalten, die bezüglich Haltbarkeit, Dosierbarkeit und Handhabbarkeit mit herkömmlichen Instant-Getränken und Instant-Tees auf Basis von Saccharose und/oder Dextrose vergleichbar oder sogar besser sind. Dieser Effekt beruht zum Teil darauf, daß die Schüttgewichte der erfindungsgemäßen Produkte wesentlich niedriger liegen als bei Verwendung von Saccharose und/oder Dextrose als Träger. Herkömmliche Instant-Tees weisen im allgemeinen ein Schüttgewicht von 0,4 bis 0,8 g pro ml auf und die erfindungsgemäßen Produkte weisen Schüttgewichte von 0,1-0,5, vorzugsweise etwa 0,2 g/ml auf. Die erfindungsgemäßen Produkte sind weiterhin wesentlich weniger hygroskopisch als instantisierte Pflanzenextrakte ohne Träger. Sie behalten daher ihr niedriges Schüttgewicht auch längere Zeit nach dem Zutritt von Luftfeuchtigkeit. Sie bleiben daher auch bei längerer Lagerung leicht dosierbar, leicht handhabbar und leicht löslich.

Die erfindungsgemäßen Instant-Getränke, Instant-Tees, Instant-Tee-Getränke, Instant-Frucht-Tees und Instant-Frucht-Tee-Getränke können ggf. Geschmacks- und/oder Aromastoffe enthalten. Zu den Geschmacksstoffen zählen unter anderem auch die kohlenhydratfreien Süßstoffe wie Saccharin, Cyclamat, Aspartam sowie die Zuckeraustauschstoffe wie Xylit, Sorbit und Mannit.

Als Aromastoffe kommen prinzipiell alle natürlichen und künstlichen Aromastoffe in Frage, die auch den instantisierten Getränken, Tees, Tee-Getränken, Frucht-Tees und Frucht-Tee-Getränken zugesetzt werden können.

Da die Aromastoffe wegen ihrer Flüchtigkeit während des Instantisierens dazu neigen, ganz oder teilweise verlorenzugehen, werden sie oftmals erst danach wieder zugegeben.

Das erfindungsgemäße Verfahren zur Herstellung von Instant-Getränken, Instant-Tees, Instant-Tee-Getränken sowie Instant-Frucht-Tees und Instant-Frucht-Tee-Getränken in Pulver- oder Granulatform auf einem Träger ist somit ein Verfahren zur Herstellung von Instant-Getränken, Instant-Tees, Instant-Tee-Getränken sowie Instant-Frucht-Tees und Instant-Frucht-Tee-Getränken in Pulver- oder Granulatform, enthaltend Kakaopulver oder pulverförmige Genußsäuren und/oder Vitamine, Pflanzenextrakte und/oder Pflanzenpulver und/oder Fruchtextrakte und/oder Fruchtpulver sowie ggf. Geschmacks- und/oder Aromastoffe auf einem Träger, dadurch gekennzeichnet, daß man entweder.

a) Kakaopulver oder pulverförmige Genußsäuren und/oder Vitamine, den Pflanzenextrakt und/oder das Pflanzenpulver und/oder den Fruchtextrakt und/oder das Fruchtpulver sowie ggf. die Geschmacks- und/oder Aromastoffe und 44,9 bis 94,7 Gew.-% eines in Wasser klar löslichen, kurzkettigen Proteins aus Bindegewebe mit dem MG 2 000 bis 10 000 mit Ausnahme von in warmem Wasser löslicher Gelatine, jedoch ohne Zusatz eines kariogenen Kohlehydrats, trocken vermischt oder

b) Kakaopulver oder pulverförmige Genußsäuren und/oder Vitamine, den Pflanzenextrakt und/oder das Pflanzenpulver und/oder den Fruchtextrakt und/oder das Fruchtpulver zusammen mit dem obigen Protein löst, vermischt und zusammen trocknet, und die so erhaltenen Produkte ggf. granuliert, preßt und/oder agglomeriert sowie ggf. mit Geschmacks- und/oder Aromastoffen versetzt.

Prinzipiell ist es in einigen Fällen möglich, auf die vollständige Trocknung zu verzichten und so rasch dispergierbare und/oder lösliche Pasten zu erhalten. Derartige Pasten lassen sich vorzugsweise in Tuben abfüllen. Derartige Pasten sind ebenfalls gut haltbar, leicht dosierbar und leicht handhabbar und können somit als Instant-Getränke, Instant-Tees, Instant-Tee-Getränke, Instant-Frucht-Tees und Instant-Frucht-

3

Tee-Getränke angesprochen werden.

Allen erfindungsgemäßen Produkten ist gemeinsam, daß sie praktisch ohne Zusatz von kariogenen Kohlenhydraten herstellbar sind und im Vergleich zu herkömmlichen Instant-Getränken und Instant-Tees sehr geringen Nährwert enthalten. Im Gegensatz zu instantisierten Nährmitteln, die ein möglichst ausgewogenes Verhältnis zwischen Kohlenhydraten, Fett, Eiweiß und Mineralstoffen enthalten sollen, weisen die erfindungsgemäßen Produkte nur einen sehr geringen Nährwert auf. Es kann somit mit ihrer Hilfe vermieden werden, dem Körper unbeabsichtigt und unkontrolliert zusätzliche Nahrungsmittel zuzuführen. Insbesondere kann beim Einsatz der Säuglings- und Kinderernährung vermieden werden, daß der Ausbildung von Karies Vorschub geleistet wird. Ein bevorzugtes Einsatzgebiet der erfindungsgemäßen Produkte ist somit auch die Säuglings- und Kinderernährung. Prinzipiell können aber die erfindungsgemäßen Instant-Getränke, Instant-Tees, Instant-Tee-Getränke, Instant-Frucht-Tees und Instant-Frucht-Tee-Getränke zur Herstellung von trinkbaren Zubereitungen aller Art verwendet werden.

Für Produkte der Säuglings- und Kinderernährung sind klar lösliche Zubereitungen bevorzugt. Die als Träger verwendeten kurzkettigen Proteine werden beispielsweise hergestellt, indem frisches Bindegewebe im technischen Maßstab enzymatisch partiell abgebaut wird, so daß kurzkettige Proteine mit Molekulargewichten im Bereich von 2 000 bis 10 000 entstehen. Diese Produkte sind geschmacksneutral, bis max. 150 °C hitzebeständig, sterilisierbar unter Pasteurisierungsbedingungen, keimarm herstellbar unterhalb der Keimzahlgrenze, die für diätetische Lebensmittel zulässig sind. Sie sind jahrelang bei trockener Lagerung haltbar und mindestens bis zu 90 % in Wasser löslich. Sie sind obendrein nicht hygroskopisch aber doch benetzbar, so daß sie nicht zum Verklumpen neigen. Derartige kurzkettige Proteine werden beispielsweise von der B.P.F. (Biologisch-Physikalische Forschungsgesellschaft mbH, Frankfurt) unter der Bezeichnung KK-Protein « F » sowie der Firma Milei in Schwäbisch-Gmünd angeboten.

Als Kakaopulver kommen erfindungsgemäß alle handelsüblichen Kakaopulver in Frage, denen gewünschtenfalls nachträglich Kakaoaroma zugesetzt wird. Als pulverförmige Genußsäuren kommen insbesondere Zitronensäure, Weinsäure und Apfelsäure in Frage. Als Vitamine können Ascorbinsäure, einige oder alle Vitamine des Vitamin B-Komplexes sowie die üblichen Gemische verschiedenster Vitamine verwendet werden.

Insbesondere wenn die Vitamine mit einer wäßrigen Lösung des Proteins zusammen sprühgetrocknet werden erhöht sich die Stabilität. Ähnliche Beobachtungen werden bei Geschmacks- und Aromastoffen gemacht, die erfindungsgemäß nach der Trocknung des Proteins vor unerwünschtem Abbau und Verderb besonders geschützt sind.

Als lösliche Pflanzenextrakte und Fruchtextrakte kommen prinzipiell alle Extrakte in Frage, die bereits nach dem Stand der Technik zu Instant-Tees verarbeitet wurden. Diese Extrakte sind meist sprühgetrocknete, wässrige Extrakte. Sofern eine ausreichende Löslichkeit gewährleistet ist, können auch getrocknete alkoholische Extrakte eingesetzt oder zugemischt werden. Diese Extrakte können zusammen mit dem Protein gelöst getrocknet werden. Vorzugsweise werden sie jedoch im trockenen Zustand mit dem Träger vermischt. Für den Verbraucher besonders gut handhabbare Produkte entstehen dann, wenn diese Gemische anschließend granuliert oder gepreßt oder agglomeriert werden, wobei man ggf. in dieser Verfahrensstufe noch Geschmacks- und/oder Aromastoffe zusetzen kann. Besonders aromastabile Produkte erhält man dann, wenn die Aromastoffe in mikroverkapselter Form in das Endprodukt eingebracht werden. Neben den üblichen Granulier-, Preß- und Agglomerierverfahren kann das Endprodukt auch nach dem sogenannten Pillsbury-Verfahren zu einem flockigen Präparat verarbeitet werden. In allen Fällen erhält man stabile, gut handhabbare und gut dosierbare Produkte mit niedriger Schüttdichte, die allen Anforderungen der Praxis gerecht werden.

In den nachfolgenden Beispielen sind typische Produkte und das Verfahren zu ihrer Herstellung näher erläutert.

## Beispiel 1

80 Gewichtsteile kurzkettiges Protein (KK-Protein « F », hergestellt von der B.P.F., Biologisch-Physikalische Forschungsgesellschaft mbH, Frankfurt) wurde mit 20 Gewichtsteilen sprühgetrocknetem Fenchelextrakt (Extraktum Foenikuli aqus. sicc.) gründlich vermischt und in einem Wirbelschichtgranulator unter Zusatz von Wasser granuliert. Dem Granulat wurden 1,8 Gew.-% Fenchelöl mikroverkapselter Form zugesetzt und gründlich eingemischt. 1 g des fertigen Granulats liefert mit 100 ml Wasser einen Fencheltee guter Qualität.

Das kurzkettige Protein hatte folgende Zusammensetzung :

| | |
|---|---|
| Protein (N' 6,25) | 94,4 % |
| Stickstoff | 15,1 % |
| Asche | 1,26 % |
| Fett | 0,091 % |
| Wasser | 4,2 % |
| Schüttgewicht | 380 g/l ± 30 g |
| Molekulargewicht | 2.000 |
| pH-Wert 5 %-ige Lösung (± 0,2 %) | 5,6 |

| | |
|---|---|
| Wasserlöslichkeit 10 g/l, | |
| Raumtemperatur, 10 h | 99,945 |
| Viskosität 10 %-ige Lösung, cP | 2,0 |
| Chlorid | nicht nachweisbar |
| Phosphat | nicht nachweisbar |
| Kalium | nicht nachweisbar |
| Natrium | 433 mg/100 g |
| Calcium | 79 mg/100 g |
| Magnesium | 8 mg/100 g |
| Gesamtkeimzahl | max. 3 000/g |
| E. coli | negativ/0,1 g |
| Coliforme | max. 10/g |
| Staphylococcus aureus | negativ/11 g |
| Salmonellen | negativ/25 g |
| Bakterienhemmstoffe (DAB 7) | nicht nachweisbar |
| Freie Stickstoffverbindungen | |
| (Ammoniak oder flüchtige Amine) | nicht nachweisbar |

Essentielle Aminosäuren

| | Gew.-% |
|---|---|
| Isoleucin | 1,49 |
| Leucin | 3,07 |
| Lysin | 3,89 |
| Methionin | 1,08 |
| Phenylalanin | 1,87 |
| Threonin | 1,80 |
| Tryptophan | 1,09 |
| Valin | 2,64 |
| Histidin | 1,27 |
| Arginin | 6,83 |

## Beispiel 2

40 Gew.-% Fenchelextrakt, 56,4 Gew.-% kurzkettiges Protein wurden wie im Beispiel 1 miteinander vermischt, granuliert und mit 3,6 Gew.-% mikroverkapseltem Fenchelöl versetzt. Das so erhaltene Produkt war ebenfalls noch rasch löslich. Es genügten bereits 0,5 g dieses Produktes, um 100 ml Fencheltee zu liefern.

## Beispiel 3

44,9 Gewichtsteile kurzkettiges Protein (KK-Protein « F », hergestellt von der B.P.F., Biologisch-Physikalische Forschungsgesellschaft mbH, Frankfurt) werden in 100 Gewichtsteilen Wasser gelöst. In die Lösung werden 30 Gewichtsteile Zitronensäure, 20 Gewichtsteile natürliches Orangenaroma, 4,4 Gewichtsteile β-Carotin und 0,7 Gewichtsteile Saccharin eingemischt. Die Mischung wird sprühgetrocknet und granuliert. 1 g des fertigen Granulats liefert mit 100 ml Wasser ein wohlschmeckendes Erfrischungsgetränk ohne Zucker.

## Beispiel 4

Eine wäßrige Lösung enthaltend 57,32 Gewichtsteile kurzkettiges Protein wurden wie in Beispiel 1 mit 40 Gewichtsteilen Kakaopulver, 1,68 Gewichtsteilen Süßstoff und 1,0 Gewichtsteilen eines Gemisches aus Natriumchlorid, Vanillin, Kakaoaroma versetzt und gemeinsam sprühgetrocknet und granuliert. 5 g dieses Granulats ergeben in 100 ml Milch rasch ein Kakaogetränk ohne Zucker.

## Beispiel 5

Eine wäßrige Lösung von 82,72 Gewichtsteilen kurzkettiges Protein wurden mit 17,28 Gewichtsteilen eines handelsüblichen Vitamingemisches (Vitamin B-Komplex 6 Gewichtsteile, Vitamin C 75 Gewichtsteile, Vitamin E 12 Gewichtsteile, Biotin 0,05 Gewichtsteile, Nicotinsäureamid 15 Gewichtsteile, Ca-D-Pantothenat 10 Gewichtsteile) gemischt, sprühgetrocknet und granuliert. 1 g des Granulats löst sich rasch in 100 ml Flüssigkeit und deckt den Tagesbedarf eines Erwachsenen.

## Beispiel 6

**0 099 557**

94,7 kg kurzkettiges Protein (KK-Protein « F ») wurden mit 5,22 kg Pflanzenextraktgemisch für Blasen- u. Nierentee in Wasser gelöst. Die Mischung wurde sprühgetrocknet, mit 36,9 g ätherischen Ölen und Geschmacksstoffen versetzt und granuliert. 100 g dieses so erhaltenen Instant-Tees enthielten folgende wirksame Anteile :

| | |
|---|---|
| Extr. Fol. Betulae aquos sicc. | 510,0 mg (8 : 1) |
| Extr. Flor. Calendulae aquos sicc. | 235,0 mg (10 : 1) |
| Extr. Herb. Equiseti aquos sicc. | 470,0 mg (7 : 1) |
| Extr. Fruct. Foeniculi aquos sicc. | 210,0 mg (7 : 1) |
| Extr. Rhiz. Graminis aquos sicc. | 470,0 mg (7 : 1) |
| Extr. Fruct. Juniperi aquos sicc. | 515,0 mg (3 : 1) |
| Extr. Rad. Liquiritiae aquos sicc. | 470,0 mg (10 : 1) |
| Extr. Rad. Ononidis aquos sicc. | 425,0 mg (8 : 1) |
| Extr. Fol. Orthosiphonis staminei aquos sicc. | 375,0 mg (6 : 1) |
| Extr. Fruct. Phaseoli sine Semine aquos sicc. | 425,0 mg (8 : 1) |
| Extr. Herb. Virgaureae aquos sicc. | 510,0 mg (7 : 1) |
| Extr. Fol. Uvae ursi aquos sicc. | 605,0 mg (6 : 1) |

Die Verhältniszahlen in Klammern geben das Konzentrationsverhältnis des jeweiligen Extraktes an, d. h. ein Teilextrakt war aus dem jeweils vorne stehenden Mengendroge hergestellt worden.

8,5 Gewichtsteile dieses Instant-Tees lassen sich in 100 ml Wasser gut lösen und liefern einen Blasen- u. Nierentee, der einem handelsüblichen nicht instantisierten Produkt entspricht.

## Beispiel 7

79,86 kg des klarlöslichen kurzkettigen Proteins gemäß Beispiel 6 wurden mit 20 kg Pflanzenextrakt für Blasen- u. Nierentee gemäß Beispiel 6 in Wasser gelöst, sprühgetrocknet und mit 0,14 kg ätherischen Ölen und Geschmacksstoffen versetzt und granuliert. 2,2 g des so erhaltenen Instant-Tees wurden in 100 ml Wasser aufgelöst und ergaben einen dem Beispiel 6 entsprechenden Tee.

## Beispiel 8

In analoger Weise wie in Beispiel 6 wurden 89,5 kg kurzkettiges Protein, 10,0 kg Extr. Sennae e fol. sicc. sowie 0,5 kg ätherische Öle und Geschmacksstoffe zu einem Instant-Tee verarbeitet, der in Wasser aufgelöst ein Abführtee ist.

## Beispiel 9

79,0 kg klarlösliches Protein, 6 kg Extr. Ginseng sicc. e radicis 5 : 1 sowie 15,0 kg Extr. Thea nigrae wurden wie im Beispiel 6 zu einem Instant-Tee verarbeitet, der als Ginseng-Tee mit Schwarztee aufgelöst werden kann.

**Patentansprüche**

1. Instant-Getränke, Instant-Tees und Instant-Tee-Getränke sowie Instant-Frucht-Tees, Instant-Frucht-Tee-Getränke in Pulver-, Granulat- oder Pastenform, enthaltend Kakaopulver, oder pulverförmige Genußsäuren und/oder Vitamine, Pflanzenextrakte und/oder Pflanzenpulver und/ oder Fruchtextrakte und/oder Fruchtpulver, sowie ggf. Geschmacks- und/oder Aromastoffe und einen Träger, dadurch gekennzeichnet, daß sie keinen Zusatz von kariogenen Kohlenhydraten enthalten, der Träger ein in Wasser klar lösliches, kurzkettiges Protein aus Bindegewebe mit dem MG 2 000 bis 10 000 mit Ausnahme von in warmem Wasser löslicher Gelatine ist und in einer Menge von 44,9 bis 94,7 Gew.-% vorliegt.

2. Instant-Getränke, Instant-Tees und Instant-Tee-Getränke sowie Instant-Frucht-Tees und Instant-Frucht-Tee-Getränke gemäß Anspruch 1, dadurch gekennzeichnet, daß sie 50-90 Gew.-% Träger enthalten.

3. Verfahren zur Herstellung von Instant-Getränken, Instant-Tees, Instant-Tee-Getränken sowie Instant-Frucht-Tees und Instant-Frucht-Tee-Getränken in Pulver- oder Granulatform, enthaltend Kakaopulver oder pulverförmige Genußsäuren und/oder Vitamine, Pflanzenextrakte und/ oder Pflanzenpulver und/oder Fruchtextrakte und/oder Fruchtpulver sowie ggf. Geschmacks- und/oder Aromastoffe auf einem Träger, dadurch gekennzeichnet, daß man entweder.

a) Kakaopulver oder pulverförmige Genußsäuren und/oder Vitamine, den Pflanzenextrakt und/oder das Pflanzenpulver und/oder den Fruchtextrakt und/oder das Fruchtpulver sowie ggf. die Geschmacks- und/oder Aromastoffe und 44,9 bis 94,7 Gew.-% eines in Wasser klar löslichen, kurzkettigen Proteins aus Bindegewebe mit dem MG 2 000 bis 10 000 mit Ausnahme von in warmem Wasser löslicher Gelatine, jedoch ohne Zusatz eines kariogenen Kohlenhydrats, trocken vermischt, oder

b) Kakaopulver oder pulverförmige Genußsäuren und/oder Vitamine, den Pflanzenextrakt und/oder das Pflanzenpulver und/oder den Fruchtextrakt und/oder das Fruchtpulver zusammen mit dem obigen Protein löst, vermischt und zusammen trocknet, und die so erhaltenen Produkte ggf. granuliert, preßt, und/oder agglomeriert sowie ggf. mit Geschmacks- und/oder Aromastoffen versetzt.

4. Verfahren gemäß Anspruch 3, dadurch gekennzeichnet, daß die Produkte 50-90 Gew.-% Träger enthalten.

5. Verwendung von in Wasser klar löslichem, kurzkettigen Protein aus Bindegewebe mit dem MG 2 000 bis 10 000 mit Ausnahme von in warmem Wasser löslicher Gelatine zur Herstellung von Instant-Getränken, Instant-Tees, Instant-Tee-Getränken, Instant-Frucht-Tees und Instant-Frucht-Tee-Getränken.

## Claims

1. Instant beverage, instant tea, instant tea beverage, instant fruit tea, and instant fruit tea beverage in the form of a powder, granules or paste which contain cocoa powder or powdery edible acids and/or vitamins, vegetable extracts and/or vegetable powders and/or fruit extracts and/or fruit powders, and optionally flavoring and/or aromatizing ingredients, and a carrier, characterized in that they do not contain any addition of cariogenic carbohydrates, the carrier is present in an amount of from 44,9 to 94,7 % by weight and is a short-chain protein, which is clearly soluble in water, has a molecular weight of from 2 000 to 10 000 and is obtained from connective tissue, except the carrier is gelatine, which is soluble in hot water.

2. Instant beverage, instant tea, instant tea beverage, instant fruit tea, and instant fruit tea beverage according to claim 1, characterized in that the carrier is present in an amount of from 50 to 90 % by weight.

3. A process for the preparation of instant beverage, instant tea, instant tea beverage, instant fruit tea, and instant fruit tea beverage in the form of a powder, granules or paste which contain cocoa powder or powdery edible acids and/or vitamins, vegetable extracts and/or vegetable powders and/or fruit extracts and/or fruit powders, and optionally flavoring and/or aromatizing ingredients, and a carrier, characterized in that either

a) cocoa powder or powdery edible acids and/or vitamins, the vegetable extract and/or the vegetable powder and/or the fruit extract and/or the fruit powder and optionally the flavoring and/or aromatizing ingredients and 44,9 to 94,7 % by weight of a short-chain protein, which is clearly soluble in water, has a molecular weight of from 2 000 to 10 000 and is obtained from connective tissue except gelatine, which is soluble in hot water, are mixed in the dry state, however, without any addition of cariogenic carbohydrates or

b) cocoa powder or powdery edible acids and/or vitamins, the vegetable extract and/or the vegetable powder and/or the fruit extract and/or the fruit powder are dissolved together with a protein, mixed and dried together, and the products thus obtained are optionally granulated, pressed and/or agglomerated, and optionally flavoring and/or aromatizing ingredients are added thereto.

4. The process according to claim 3, characterized in that the products contain from 50 to 90 % by weight of the carrier.

5. Use of a short-chain protein from connective tissue, which is clearly soluble in water having a molecular weight of from 2 000 to 10 000 except gelatine, which is soluble in hot water, for the preparation of an instant beverage, instant tea, instant tea beverage, instant fruit tea, and instant fruit tea beverage.

## Revendications

1. Boissons instantanées, produits sous forme de poudre de granulés ou de pâte pour faire des thés et tisanes instantanés ainsi que pour faire des thés et tisanes instantanés à base de fruits, contenant de la poudre de cacao ou des acides d'agrément pulvérulents et/ou des vitamines, des extraits de plantes et/ou de la poudre de plantes et/ou des extraits de fruits et/ou de la poudre de fruits, ainsi qu'éventuellement des matières savoureuses et/ou aromatiques et un véhicule, caractérisés en ce qu'ils ne contiennent aucune addition d'hydrates de carbone cariogènes, en ce que le véhicule est une protéine à chaîne courte de tissu conjonctif, soluble de façon limpide dans l'eau avec un poids moléculaire de 2 000 à 10 000, à l'exclusion de la gélatine soluble dans l'eau chaude, et qui présente à raison de 44,9 à 94,7 % en poids.

2. Boissons instantanées, produits pour faire des thés et tisanes instantanés ainsi que pour faire des thés et tisanes instantanés à base de fruits, selon la revendication 1, caractérisés en ce qu'ils contiennent 50 à 90 % en poids de véhicule.

3. Procédé pour la préparation de boissons instantanées, et de produits pour faire des thés et tisanes instantanés ainsi que pour faire des thés et tisanes instantanés à base de fruits, sous forme de poudre, de granulés, contenant de la poudre de cacao ou des acides d'agrément pulvérulents et/ou des vitamines, des extraits de plantes et/ou de la poudre de plantes et/ou des extraits de fruits et/ou de la poudre de

**0 099 557**

fruits, ainsi qu'éventuellement des matières savoureuses et/ou aromatiques et un véhicule, caractérisé en ce que, soit

a) on mélange à sec de la poudre de cacao ou des acides d'agrément pulvérulents et/ou des vitamines, l'extrait de plantes et/ou la poudre de plantes et/ou l'extrait de fruits et/ou la poudre de fruits ainsi qu'éventuellement les matières savoureuses et/ou les matières aromatiques et 44,9 à 94,7 % en poids d'une protéine de tissu conjonctif à chaîne courte, soluble dans l'eau de façon limpide avec un poids moléculaire de 2 000 à 10 000, à l'exclusion de la gélatine soluble dans l'eau chaude, mais sans addition d'un hydrate de carbone cariogène, soit

b) on dissout, mélange et sèche ensemble de la poudre de cacao ou des acides d'agrément pulvérulents et/ou des vitamines, l'extrait de plantes et/ou la poudre de plantes et/ou l'extrait de fruits et/ou la poudre de fruits conjointement avec la protéine susdite et l'on granule, comprime et/ou agglomère éventuellement les produits ainsi obtenus et éventuellement on leur adjoint des matières savoureuses et/ou aromatiques.

4. Procédé selon la revendication 3, caractérisé en ce que les produits contiennent 50 à 90 % en poids de véhicule.

5. Utilisation de protéine de tissu conjonctif à chaîne courte, soluble de façon limpide dans l'eau, avec un poids moléculaire de 2 000 à 10 000, à l'exclusion de la gélatine soluble dans l'eau chaude, pour la préparation de boissons instantanées, de produits pour faire des thés et tisanes instantanés ainsi que pour faire des thés et tisanes instantanés à base de fruits.